# EUROPÄISCHE PATENTSCHRIFT

(11) **EP 4 077 969 B1**
(45) Veröffentlichungstag und Bekanntmachung des Hinweises auf die Patenterteilung: **03.06.2026**
(21) Anmeldenummer: 20797716.6
(22) Anmeldetag: 26.10.2020
(51) Int. Cl.: F16G 3/02, F16G 3/04

(54) **HAKENVERBINDERANORDNUNG FÜR EIN TRANSPORTBAND SOWIE TRANSPORTBAND HIERMIT**
HOOK CONNECTOR ARRANGEMENT FOR A CONVEYOR BELT AND CONVEYOR BELT WITH SAME
AGENCEMENT DE CONNECTEUR À CROCHET POUR UNE BANDE TRANSPORTEUSE ET BANDE TRANSPORTEUSE ÉQUIPÉE DE CELUI-CI

(30) Priorität: 18.12.2019 DE 102019220007
(43) Veröffentlichungstag der Anmeldung: 26.10.2022
(73) Patentinhaber: ContiTech Deutschland GmbH, 30175 Hannover (DE)
(72) Erfinder: BEHRENS, Carsten, 30165 Hannover (DE)
(74) Vertreter: Preusser, Andrea
(86) Internationale Anmeldenummer: PCT/EP2020/080019
(87) Internationale Veröffentlichungsnummer: WO 2021/121741

(56) Entgegenhaltungen:
- EP-A1- 1 338 825
- DE-A1- 4 235 759
- US-A- 1 653 791
- US-A- 1 789 191

## Beschreibung

Die vorliegende Erfindung betrifft eine Hakenverbinderanordnung und ein Transportband gemäß dem Oberbegriff des Patentanspruchs 1.

Bei verschiedensten Anwendungen werden Transportbänder verwendet, um insbesondere Fördergüter zu transportieren. Derartige Transportbänder können auch als Fördergurte, Förderbänder oder Transportgurte bezeichnet werden. Als Fördergüter kommen insbesondere lose Güter wie z.B. Schüttgüter in Betracht. Die Transportbänder werden in der Bewegungsrichtung, welche auch als Förderrichtung oder als Laufrichtung bezeichnet werden kann, endlos geschlossen verwendet.

Derartige Transportbänder bestehen üblicherweise aus einem flexiblen Material wie z.B. Gummi, in welches zur Übertragung der Zugkräfte in der Bewegungsrichtung sog. Zugträger eingebettet sind. Dies können je nach Art des Transportbands Stahlseile oder auch textile flächige Zugträger sein.

Bei der mechanischen Endlosschließung von Transportbändern mit textilen flächigen Zugträgern finden üblicherweise sog. Hakenverbinder einen Einsatz. Die Hakenverbinder stellen U-förmige metallische Klammern dar, welche entlang der Laufrichtung des Transportbands mit ihrer jeweiligen Öffnung auf ein offenes Ende des Transportbands aufgesetzt und dann senkrecht zur flächigen Erstreckung des Transportbands zusammengepresst werden. Hierdurch wird ein Kraftschluss der Hakenverbinder an dem offenen Ende des Transportbands erzeugt.

Üblicherweise wird ein zusätzlicher Formschluss der Hakenverbinder an dem offenen Ende des Transportbandes durch eine zusätzliche mechanische Verankerung der Hakenverbinder erreicht, indem einzelne Nietstifte oder Schrauben durch das Zugträgergewebe geschlagenen bzw. geschraubt werden, welche die Ober- und Unterseite des das Gurtende umfassenden Hakenverbinders auf der Gurtoberfläche fixieren. Durch den zusätzlichen Pressdruck der Nietstifte oder durch die Vorspannkraft der Verschraubung kann eine zusätzliche Fixierung der Hakenverbinder am offenen Ende des Transportbands erfolgen. Die Wirkung des Formschlusses ist dabei üblicherweise größer als die Wirkung des Kraftschlusses.

Die Hakenverbinder jedes der beiden offenen Endes des Transportbands, d.h. die beiden Gurtenden, bilden hierdurch in der Querrichtung, d.h. quer zur Laufrichtung und quer zur Höhe, des Transportbands einen durchgehenden Hohlraum aus. Gleichzeitig sind die Hakenverbinder im Bereich ihrer U-förmigen Bögen schmaler als im Bereich der Nietverbindung ausgebildet, so dass die U-förmigen Bögen zweier Hakenverbinderanordnungen von korrespondierenden offenen Gurtenden abwechselnd in der Querrichtung zwischen einander angeordnet werden können und sich somit die beiden Hakenverbinderanordnungen in der Querrichtung überlappen. Die beiden offenen Gurtenden können nun miteinander gelenkig verbunden werden, indem ein üblicherweise zylindrischer Verbinderstand in der Querrichtung durch die einander überlappenden Hohlräume der beiden Hakenverbinderanordnung geschoben und gegen Herausrutschen gesichert wird. Alternativ ist auch die Verwendung von seilartigen, flexiblen Verbindern bekannt.

Grundsätzlich kann eine derartige Verbindung als eine Aneinanderreihung von einzelnen Gelenkelementen angesehen werden. Hierbei verbessert sich die Muldbarkeit eines solchen mit Haken verbundenen Transportbands mit der Anzahl der verwendeten Verbindersegmente über die Gurtbreite.

Nachteilig bei derartigen Verbindungen zur mechanischen Endlosschließung von Transportbändern mit textilen flächigen Zugträgern ist, dass es zu einem statischen oder dynamischen Versagen der Verbindung kommen kann, welche zu einer Trennung der offenen Enden und damit zu einem Reißen des Transportbands führen kann. Dies kann für die entsprechende Transportbandanlage zum Ausfall und Stillstand führen.

Das dynamische Versagen der Verbindung tritt üblicherweise nach einem immer gleichen Ablauf ein. Zunächst erfolgt eine Reduktion der Vorspannung auf der geklemmten Gurtoberfläche durch ein Kriechen des den textilen flächigen Zugträger umschließenden elastomeren Materials wie üblicherweise Gummi. Im Anschluss ist dann ein "Auskämmen" der einzelnen Press-/Nietstifte aus dem textilen flächigen Zugträger zu beobachten. Hierbei zieht entweder der Stift den als Widerstand und Verstärkung quer zur Bewegungsrichtung eingebrachten Schussfaden aus der Gewebe-Gummi-Matrix oder aber einzelne Schuss- oder Kettfäden beginnen mit der Zeit aufgrund ungleicher Lastaufgabe zu reißen und schwächen die Verbindung zunächst nur lokal. Durch die Akkumulation von mehreren derartigen Kleinstschäden in Kettrichtung erfolgt im weiteren Betrieb des Transportbands dann der Gewaltbruch der verbliebenen Kettfäden bzw. ein Auskämmen der verbleibenden Schussfäden bei entsprechender Überlast für den dann verbleibenden Zugträgerquerschnitt.

Zu beachten ist hierbei, dass Hakenverbinder bzw. eine Hakenverbinderanordnung hinsichtlich ihrer statischer und dynamischer Verbindungsfestigkeit deutlich sowohl einer Heiß- als auch einer Kaltvulkanisation unterlegen sind. Diesem Umstand wird üblicherweise durch entsprechend höhere Sicherheitsfaktoren bei der Gurtauslegung von Transportbändern Rechnung getragen. Demnach ist eine Hakenverbinderanordnung einer "klassischen" Vulkanisation technisch unterlegen.

Zudem ist bei der Gurtauslegung bei der Verwendung einer Hakenverbinderanordnung das Design des Zugträgergewebes insbesondere hinsichtlich der Verschränkung der Schussfäden von entscheidender Wichtigkeit für den Gurtaufbau. Dieses gilt im Besonderen, falls eine hohe dynamische Verbindungsfestigkeit angestrebt wird.

Die DE 42 35 759 A1 beschreibt ein Verfahren zum Verbinden der Gurtenden von Förderbändern und bzw. oder von Förderbandstücken mit Hilfe von an den Gurtenden befestigbaren Verbindungselementen, wobei mindestens ein Zugelement zusätzlich auf dem Gurtende angeordnet wird.

Die EP 1 338 825 A1 beschreibt eine Verbindung von als Drahthaken ausgebildeten Drahtverbindern mit einem Ende eines Gurtes. Der jeweilige Drahthaken weist zwei Schenkel, eine diese verbindende Kupplungsöse und in den Gurt einzupressende Hakenabschnitte auf. Es ist ein sich über die Breite des Gurtes erstreckendes Abdeckelement vorgesehen, das, ausgehend von der Stirnseite des Gurtes, beidseitig des Gurtes angeordnet ist und die Schenkel der Drahthaken abdeckt. Die Befestigung der Drahthaken am Gurtende und das Anbringen des Abdeckelementes erfolgen in einem Arbeitsgang.

Eine Aufgabe der vorliegenden Erfindung ist es, eine Hakenverbinderanordnung für ein Transportband der eingangs beschriebenen Art bereit zu stellen, welche eine erhöhte statische und bzw. oder dynamische Verbindungsfestigkeit aufweist als bisher bekannte Hakenverbinderanordnungen für Transportbänder. Dies soll insbesondere möglichst einfach, flexibel und bzw. oder kostengünstig erfolgen. Zumindest soll eine Alternative für bekannte Hakenverbinderanordnungen für Transportbänder geschaffen werden.

Die Aufgabe wird erfindungsgemäß durch eine Hakenverbinderanordnung mit den Merkmalen gemäß Patentanspruch 1 gelöst. Vorteilhafte Weiterbildungen sind in den Unteransprüchen beschrieben.

Somit betrifft die vorliegende Erfindung eine Hakenverbinderanordnung und ein Transportband mit einer Mehrzahl von Hakenverbindern, welche ausgebildet sind, ein offenes Ende des Transportbands wenigstens kraftschlüssig zwischen sich zu halten, wobei die Hakenverbinder innenseitig mittels eines Verbindungselements in einer Querrichtung miteinander verbunden sind.

Die erfindungsgemäße Hakenverbinderanordnung ist dadurch gekennzeichnet, dass wenigstens ein Hakenverbinder innenseitig ein Klemmelement aufweist, welches dem Verbindungselement gegenüberliegend angeordnet ist. Somit kann erfindungsgemäß beidseitig eine klemmende und damit kraftschlüssige Wirkung auf das offene Ende des Transportbands ausgeübt werden, wodurch der Kraftschluss verstärkt sowie ggfs. ein zusätzlicher Formschluss bewirkt werden kann. Dies kann die mechanische Anbindung der Hakenverbinderanordnung an das offene Ende des Transportbands und damit die statische und bzw. oder dynamische Verbindungsfestigkeit verbessern, wodurch auch die Lebensdauer der Verbindung der offenen Enden des Transportbandes erhöht werden kann.

Durch eine erhöhte Lebensdauer der Verbindung der offenen Enden des Transportbandes können ungeplante Stillstände der entsprechenden Transportbandanlage im Betrieb durch ein etwaiges Verbindungsnachsetzen oder Verbindungsversagens im Feld reduziert werden. Dies kann eine erhöhte Verfügbarkeit der Transportbandanlage bedeuten.

Auch kann eine Reduktion der Herstellkosten dadurch erfolgen, dass eine Annäherung der bisher verwendeten Sicherheitsfaktoren für Hakenverbindungen an die Sicherheitsfaktoren einer Vulkanisation erfolgen kann, indem dann eine Reduktion der Gurtfestigkeit unter Beibehaltung der Sicherheitsfaktoren ermöglicht werden kann.

Ferner kann eine größere und ggfs. auch günstigere Auswahl an technischen Zugträgerkonstruktionen für Transportbänder genutzt werden, indem zusätzliche Zugträger verwendet werden können und bzw. oder ein verbesserter Kraftfluss direkt in den Zugträger umgesetzt werden kann.

Mit anderen Worten kann es erfindungsgemäß durch die Verwendung von wenigstens einem zusätzlichen Klemmelement durch die Konzentration der Verpresskraft auf wenigstens zwei lokale und vorzugsweise lineare Elemente quer zur Laufrichtung zu einer stärkeren Klemmung gegenüber der bisher bekannten einfachen glatten Flächenpressung kommen. Die erfindungsgemäße beidseitige Klemmung kann selbst bei einsetzender Entlastung der Verpressung durch ein Materialkriechen des Elastomers des Transportbands somit länger aufrecht erhalten bleiben. Dies kann den Kraftschluss gegenüber bekannten Hakenverbinderanordnungen erhöhen.

Ferner kann erfindungsgemäß durch die Verwendung von wenigstens einem zusätzlichen Klemmelement der bisher eher aus einer flächigen Pressung bestehende Kraftschluss des Hakenverbinders um einen Formschluss ergänzt bzw. in einem Formschluss gewandelt werden, welcher quer zur Zugbelastung der Laufrichtung zwischen dem umschließenden Hakenverbinder und dem Transportband erzeugt werden kann. Mit anderen Worten kann sich ein Teil des Elastomers des Transportbands sowohl um das Verbindungselement als auch um das Klemmelement deformieren und so zu einem zusätzlichen Formschluss des den Zugträger bedeckenden Elastomers des Transportbands bzw. dessen Deckplatte führen.

Bei der Verwendung eines textilen flächigen Zugträgers des Transportbands sowie von Nieten der Hakenverbinderanordnung kann mittels dieses zusätzlichen Formschlusses auch direkt der Kettfaden durch die Adhäsionskräfte des Elastomers des Transportbands außerhalb des Verbands von Schussfaden und Nietstift mit in den Kraftfluss eingeschlossen werden. Die dynamische Belastung der am Niet vorliegenden Gewebe-Elastomermatrix kann reduziert und somit die Verbindungsfestigkeit durch die zusätzliche lasttragende Komponente der Hakenverbinderanordnung erhöht werden.

Dies kann durch die Verwendung eines dem Verbindungselement gegenüberliegend angeordneten Klemmelements besonders einfach, flexibel und bzw. oder kostengünstig erfolgen.

Gemäß einem Aspekt der Erfindung weisen die Hakenverbinder jeweils innenseitig ein Klemmelement auf, welches dem Verbindungselement gegenüberliegend angeordnet ist. Dies kann mittels eines gemeinsamen durchgehenden Klemmelements oder durch jeweils wenigstens ein einzelnes Klemmelement umgesetzt werden. In jedem Fall können hierdurch die zuvor beschriebenen Eigenschaften und Vorteile bei mehreren und ggfs. bei allen Hakenverbindern der Hakenverbinderanordnung umgesetzt und genutzt werden.

Gemäß einem weiteren Aspekt der Erfindung weisen die Hakenverbinder innenseitig ein gemeinsames Klemmelement auf, welches dem Verbindungselement gegenüberliegend angeordnet ist und sich in der Querrichtung über die Hakenverbinder erstreckt. Hierdurch können zum einen die zuvor beschriebenen Eigenschaften und Vorteile bei mehreren und ggfs. bei allen Hakenverbindern der Hakenverbinderanordnung umgesetzt und genutzt werden. Dies kann durch ein gemeinsames Klemmelement vergleichsweise einfach erfolgen. Zum anderen kann gleichzeitig eine Verbindung der Hakenverbindung auch auf der dem Verbindungselement gegenüberliegenden Seite der Hakenverbinder in der Querrichtung erfolgen, was die Haltbarkeit der Verbindung verbessern kann. Auch kann die Positionierung der Hakenverbinder zueinander bzw. die Verbindung der Hakenverbinder miteinander verbessert werden.

Gemäß einem weiteren Aspekt der Erfindung sind das Verbindungselement und das Klemmelement einander direkt gegenüberliegend angeordnet. Dies kann die zuvor beschriebenen Wirkungen dem Klemmelements weiter verstärken.

Gemäß einem weiteren Aspekt der Erfindung ist das Verbindungselement als Verbindungsdraht sich in der Querrichtung erstreckend ausgebildet. Dies kann die Umsetzung vereinfachen, da lediglich ein Verbindungselement verwendet werden muss. Dies kann insbesondere als Draht vergleichsweise einfach und bzw. oder kostengünstig erfolgen.

Gemäß einem weiteren Aspekt der Erfindung ist das Klemmelement als Klemmdraht sich in der Querrichtung erstreckend ausgebildet. Dies kann die Umsetzung vereinfachen, da lediglich ein Klemmelement verwendet werden muss. Dies kann insbesondere als Draht vergleichsweise einfach und bzw. oder kostengünstig erfolgen.

Gemäß einem weiteren Aspekt der Erfindung ist das Klemmelement ausgebildet, in das Transportband, vorzugsweise in eine elastomere Deckschicht des Transportbands, einzudringen. Dies kann beispielsweise durch eine raue Oberfläche des Klemmelements, durch auf der Oberfläche des Klemmelements angeordneten Vorsprüngen und dergleichen erfolgen. Letzteres kann beispielsweise durch Spitzen und dergleichen erfolgen. In jedem Fall kann durch das Eindringen des Klemmelements in das Transportband ein zusätzlicher formschlüssiger Halt zwischen dem Klemmelement und damit den Hakenverbindern sowie dem Transportband erreicht werden, wodurch die statische und bzw. oder dynamische Verbindungsfestigkeit weiter erhöht werden kann.

Gemäß einem weiteren Aspekt der Erfindung sind die Hakenverbinder ferner ausgebildet, das offene Ende des Transportbands ferner mittels Nieten formschlüssig zwischen sich zu halten. Dies kann die statische und bzw. oder dynamische Verbindungsfestigkeit weiter erhöhen.

Die vorliegende Erfindung betrifft auch ein Transportband mit wenigstens einer Hakenverbinderanordnung wie zuvor beschrieben. Hierdurch können die zuvor beschriebenen Eigenschaften und Vorteile einer erfindungsgemäßen Hakenverbinderanordnung bei einem Transportband umgesetzt und genutzt werden.

Gemäß einem Aspekt der Erfindung weist das Transportband einen textilen flächigen Zugträger auf. Auf diese Art und Weise kann die erfindungsgemäße Hakenverbinderanordnung bei derartigen Transportbändern genutzt werden, was zu den eingangs beschriebenen Eigenschaften und Vorteilen führen kann. Als derartige textile flächige Zugträger kommen insbesondere Gewebe in Betracht, welche Zugkräfte in der Laufrichtung des Transportbands wirkungsvoll übertragen können.

Gemäß einem weiteren Aspekt der Erfindung weist das Transportband eine Mehrzahl seilartiger Zugträger auf, welche sich parallel zueinander in einer Laufrichtung des Transportbands erstrecken. Auf diese Art und Weise kann die erfindungsgemäße Hakenverbinderanordnung bei derartigen Transportbändern genutzt werden, was zu den eingangs beschriebenen Eigenschaften und Vorteilen führen kann. Als derartige seilartige Zugträger kommen insbesondere Stahlseile in Betracht, welche Zugkräfte in der Laufrichtung des Transportbands wirkungsvoll übertragen können.

Gemäß einem weiteren Aspekt der Erfindung weist das Transportband jeweils eine elastomere Deckschicht auf, welche eine größere Shore-Härte als ein elastomerer Grundkörper aufweist, welcher zwischen den beiden elastomeren Deckschichten angeordnet ist. Dies kann die kraftschlüssige und bzw. oder formschlüssige Wirkung der erfindungsgemäßen Hakenverbinderanordnung begünstigen.

Ein Ausführungsbeispiel und weitere Vorteile der Erfindung werden nachstehend im Zusammenhang mit den folgenden Figuren erläutert. Darin zeigt:
- Fig. 1: eine perspektivische schematische Darstellung einer bekannten Hakenverbinderanordnung;
- Fig. 2: eine weitere perspektivische schematische Darstellung der bekannten Hakenverbinderanordnung der Fig. 1;
- Fig. 3: eine perspektivische schematische Darstellung einer erfindungsgemäßen Hakenverbinderanordnung;
- Fig. 4: eine weitere perspektivische schematische Darstellung der erfindungsgemäßen Hakenverbinderanordnung der Fig. 3; und
- Fig. 5: einen schematischen Querschnitt durch die erfindungsgemäße Hakenverbinderanordnung an einem offenen Ende eines Transportbands.

Die Beschreibung der o.g. Figuren erfolgt in kartesischen Koordinaten mit einer Längsrichtung X, einer zur Längsrichtung X senkrecht ausgerichteten Querrichtung Y sowie einer sowohl zur Längsrichtung X als auch zur Querrichtung Y senkrecht ausgerichteten vertikalen Richtung Z. Die Längsrichtung X kann auch als Tiefe X bzw. als Laufrichtung X des Transportbands 3, die Querrichtung Y auch als Breite Y und die vertikale Richtung Z auch als Höhe Z bezeichnet werden.

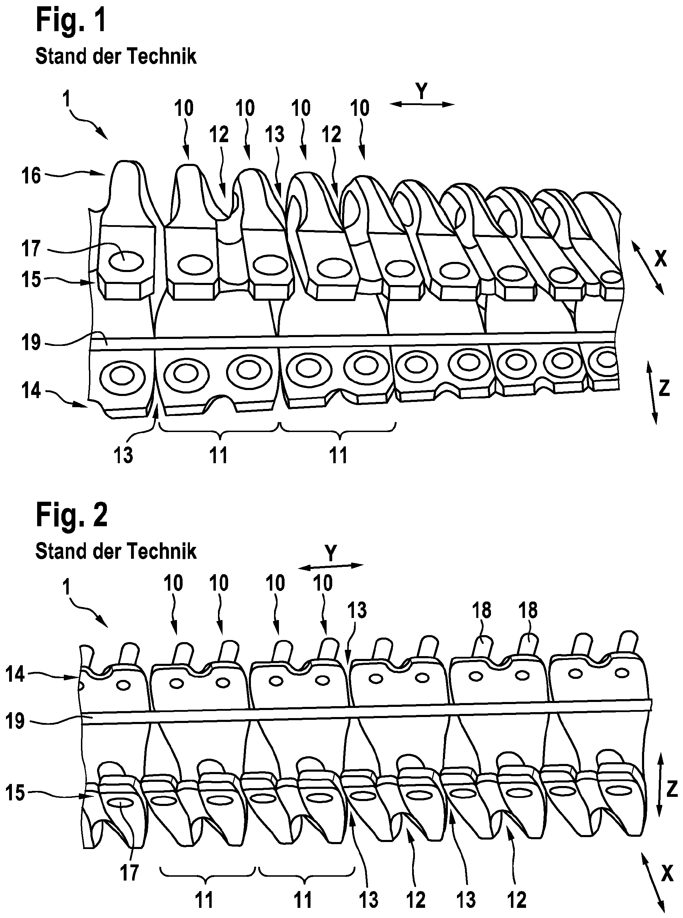

Fig. 1 zeigt eine perspektivische schematische Darstellung einer bekannten Hakenverbinderanordnung 1. Fig. 2 zeigt eine weitere perspektivische schematische Darstellung der bekannten Hakenverbinderanordnung 1 der Fig. 1.

Die bekannte Hakenverbinderanordnung 1 der Fig. 1 und 2 weist eine Mehrzahl von baugleichen Hakenverbinderpaaren 11 auf, welche jeweils aus zwei baugleichen Hakenverbindern 10 bestehen. Die beiden Hakenverbinder 10 eines Hakenverbinderpaares 11 sind an zwei Verbindungsstellen 12 miteinander in der Breite Y stoffschlüssig verbunden. Die einzelnen Hakenverbinderpaare 11 sind voneinander durch Abstände 13 in der Breite Y beabstandet.

Jeder Hakenverbinder 10 weist ein nietkopfseitiges offene Ende 14 und ein nietfußseitiges offenes Ende 15 auf, welche von einem U-förmigen Bogen 16 verbunden werden. An dem nietkopfseitigen offenen Ende 14 ist jeweils eine Niete 18 vorgesehen, welche durch eine in der Höhe Z gegenüberliegende Durchgangsöffnung 17 der nietfußseitigen offenen Enden 15 der Hakenverbinder 10 hindurchgeführt und dann von außen verformt werden kann.

Die einzelnen Hakenverbinderpaare 11 werden in der Breite Y durch ein Verbindungselement 19 in Form eines Verbindungsdrahts 19 miteinander verbunden, welcher innenseitig an dem nietkopfseitigen offenen Ende 14 der Hakenverbinder 10 stoffschlüssig angeordnet ist. Hierdurch wird die bekannte Hakenverbinderanordnung 1 gebildet.

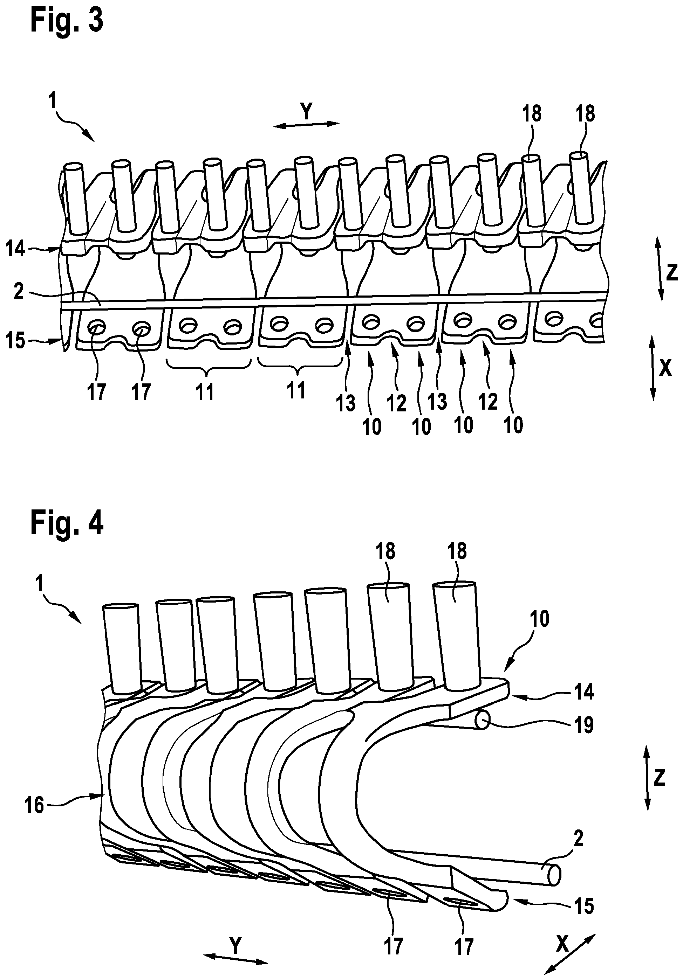

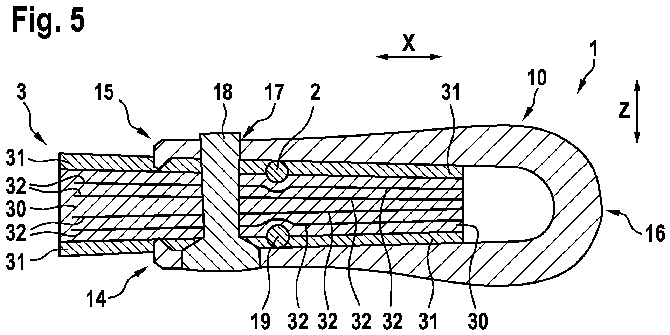

Fig. 3 zeigt eine perspektivische schematische Darstellung einer erfindungsgemäßen Hakenverbinderanordnung 1. Fig. 4 zeigt eine weitere perspektivische schematische Darstellung der erfindungsgemäßen Hakenverbinderanordnung 1 der Fig. 3. Fig. 5 zeigt einen schematischen Querschnitt durch die erfindungsgemäße Hakenverbinderanordnung 1 an einem offenen Ende eines Transportbands 3.

Die erfindungsgemäße Hakenverbinderanordnung 1 der Fig. 3 bis 5 unterscheidet sich von der bekannten Hakenverbinderanordnung der Fig. 1 bis 2 dadurch, dass bei der erfindungsgemäßen Hakenverbinderanordnung 1 der Fig. 3 bis 5 parallel zum Verbindungsdraht 19 verlaufend ein Klemmelement 2 in Form eines Klemmdrahts 2 stoffschlüssig innenseitig am nietfußseitigen offenen Enden 15 der Hakenverbinder 10 angeordnet ist.

Wird nun eine erfindungsgemäße Hakenverbinderanordnung 1 an einem offenen Ende des bereits erwähnten Transportbands 3 angeordnet und dort dessen beiden offenen Enden 14, 15 in der Höhe Z miteinander verpresst sowie vernietet, siehe Fig. 5, so drücken der Verbindungsdraht 19 und der zusätzliche Klemmdraht 2 in der Höhe Z von beiden Seiten auf die elastomeren Deckschichten 31 des Transportbands 3. Hierdurch wird auch der elastomere Grundkörper 30 des Transportbands 3 samt der dort eingebetteten textilen flächigen Zugträger 32 in der Höhe Z zusammengedrückt.

Auf diese Art und Weise entsteht zwischen dem Verbindungsdraht 19 und dem Klemmdraht 2 zusätzlich zu dem bisher von der bekannten Hakenverbinderanordnung 1 ausgeübten Kraftschluss zwischen den offenen Enden 14, 15 - unabhängig von der Wirkung der Nieten 18 - sowohl ein erhöhter Kraftschluss als auch ein zusätzlicher Formschluss. Dies kann sowohl die statische als auch die dynamische Verbindungsfestigkeit verbessern und somit die Lebensdauer der Verbindung der offenen Enden des Transportbandes 3 erhöhen.

### Bezugszeichenliste (Teil der Beschreibung)

- X: Längsrichtung; Tiefe; Laufrichtung
- Y: Querrichtung; Breite
- Z: vertikale Richtung; Höhe

- 1: Hakenverbinderanordnung
- 10: Hakenverbinder
- 11: Hakenverbinderpaare
- 12: Verbindungsstellen der Hakenverbinder 10 eines Hakenverbinderpaares 11
- 13: Abstände der Hakenverbinder 10 eines Hakenverbinderpaares 11
- 14: nietkopfseitige offene Enden der Hakenverbinder 10
- 15: nietfußseitige offene Enden der Hakenverbinder 10
- 16: U-förmige Bögen der Hakenverbinder 10
- 17: Durchgangsöffnungen der nietfußseitigen offenen Enden 14 der Hakenverbinder 10
- 18: Nieten der nietfußseitigen offenen Enden 15 der Hakenverbinder 10
- 19: Verbindungselement bzw. Verbindungsdraht der Hakenverbinderpaare 11

- 2: Klemmelement; Klemmdraht

- 3: Transportband
- 30: elastomerer Grundkörper
- 31: elastomere Deckschichten
- 32: textile flächige Zugträger; seilartige Zugträger

## Patentansprüche

1. Hakenverbinderanordnung (1) und ein Transportband (3)
mit einer Mehrzahl von Hakenverbindern (10), welche ausgebildet sind, ein offenes Ende des Transportbands (3) wenigstens kraftschlüssig zwischen sich zu halten,
wobei die Hakenverbinder (10) innenseitig mittels eines Verbindungselements (19) in einer Querrichtung (Y) miteinander verbunden sind,
**dadurch gekennzeichnet, dass**
wenigstens ein Hakenverbinder (10) innenseitig ein Klemmelement (2) aufweist, welches dem Verbindungselement (19) gegenüberliegend angeordnet ist.

2. Hakenverbinderanordnung (1) und ein Transportband nach Anspruch 1, **dadurch gekennzeichnet,**
**dass**
die Hakenverbinder (10) jeweils innenseitig ein Klemmelement (2) aufweisen, welches dem Verbindungselement (19) gegenüberliegend angeordnet ist.

3. Hakenverbinderanordnung (1) und ein Transportband nach Anspruch 1 oder 2, **dadurch gekennzeichnet, dass**
die Hakenverbinder (10) innenseitig ein gemeinsames Klemmelement (2) aufweisen, welches dem Verbindungselement (19) gegenüberliegend angeordnet ist und sich in der Querrichtung (Y) über die Hakenverbinder (10) erstreckt.

4. Hakenverbinderanordnung (1) und ein Transportband nach einem der vorangehenden Ansprüche.
**dadurch gekennzeichnet, dass**
das Verbindungselement (19) und das Klemmelement (2) einander direkt gegenüberliegend angeordnet sind.

5. Hakenverbinderanordnung (1) und ein Transportband nach einem der vorangehenden Ansprüche
**dadurch gekennzeichnet, dass**
das Verbindungselement (19) als Verbindungsdraht (19) sich in der Querrichtung (Y) erstreckend ausgebildet ist.

6. Hakenverbinderanordnung (1) und ein Transportband nach einem der vorangehenden Ansprüche,
**dadurch gekennzeichnet, dass**
das Klemmelement (2) als Klemmdraht (2) sich in der Querrichtung (Y) erstreckend ausgebildet ist.

7. Hakenverbinderanordnung (1) und ein Transportband nach einem der vorangehenden Ansprüche
**dadurch gekennzeichnet, dass**
das Klemmelement (2) ausgebildet ist, in das Transportband (3), vorzugsweise in eine elastomere Deckschicht (31) des Transportbands (3), einzudringen.

8. Hakenverbinderanordnung (1) und ein Transportband nach einem der vorangehenden Ansprüche
**dadurch gekennzeichnet, dass**
die Hakenverbinder (10) ferner ausgebildet sind, das offene Ende des Transportbands (3) ferner mittels Nieten (18) formschlüssig zwischen sich zu halten.

9. Hakenverbindung und ein Transportband nach einem der vorangehenden Ansprüche **dadurch gekennzeichnet, dass** das Transportband einen textilen flächigen Zugträger (32) aufweist.

10. Hakenverbindung und ein Transportband nach einem der vorangehenden Ansprüche **dadurch gekennzeichnet, dass** eine Mehrzahl seilartiger Zugträger (32),sich parallel zueinander in einer Laufrichtung (X) des Transportbands (3) erstrecken.

11. Hakenverbindung und ein Transportband nach einem der vorangehenden Ansprüche **dadurch gekennzeichnet, dass** jeweils eine elastomere Deckschicht (31), welche eine größere Shore-Härte als ein elastomerer Grundkörper (30) aufweist, zwischen den beiden elastomeren Deckschichten (31) angeordnet ist.

## Claims

1. Hook fastener arrangement (1) and a conveyor belt (3) having a plurality of hook fasteners (10) which are designed to hold an open end of the conveyor belt (3) between them at least by frictional engagement, wherein the hook fasteners (10) are connected to one another on the inner side by means of a connecting element (19) in a transverse direction (Y), **characterized in that** at least one hook fastener (10) has on the inner side a clamping element (2) which is arranged opposite the connecting element (19).

2. Hook fastener arrangement (1) and a conveyor belt according to claim 1, **characterized in that** the hook fasteners (10) each have on the inner side a clamping element (2) which is arranged opposite the connecting element (19).

3. Hook fastener arrangement (1) and a conveyor belt according to claim 1 or 2, **characterized in that** the hook fasteners (10) have on the inner side a common clamping element (2) which is arranged opposite the connecting element (19) and extends in the transverse direction (Y) over the hook fasteners (10).

4. Hook fastener arrangement (1) and a conveyor belt according to one of the preceding claims, **characterized in that** the connecting element (19) and the clamping element (2) are arranged directly opposite one another.

5. Hook fastener arrangement (1) and a conveyor belt according to one of the preceding claims, **characterized in that** the connecting element (19) is designed as a connecting wire (19) extending in the transverse direction (Y).

6. Hook fastener arrangement (1) and a conveyor belt according to one of the preceding claims, **characterized in that** the clamping element (2) is designed as a clamping wire (2) extending in the transverse direction (Y).

7. Hook fastener arrangement (1) and a conveyor belt according to one of the preceding claims, **characterized in that** the clamping element (2) is designed to penetrate into the conveyor belt (3), preferably into an elastomeric cover layer (31) of the conveyor belt (3).

8. Hook fastener arrangement (1) and a conveyor belt according to one of the preceding claims, **characterized in that** the hook fasteners (10) are furthermore designed to hold the open end of the conveyor belt (3) between them by positive locking by means of rivets (18).

9. Hook fastener arrangement and a conveyor belt according to one of the preceding claims, **characterized in that** the conveyor belt has a textile planar tensile member (32).

10. Hook fastener arrangement and a conveyor belt according to one of the preceding claims, **characterized in that** a plurality of cable-like tensile members (32) extend parallel to one another in a running direction (X) of the conveyor belt (3).

11. Hook fastener arrangement and a conveyor belt according to one of the preceding claims, **characterized in that** in each case an elastomeric cover layer (31) which has a higher Shore hardness than an elastomeric core body (30) is arranged between the two elastomeric cover layers (31).

## Revendications

1. Dispositif de jonction à crochets (1) et bande transporteuse (3) comprenant une pluralité de crochets de jonction (10) conçus pour maintenir entre eux au moins par adhérence une extrémité ouverte de la bande transporteuse (3), les crochets de jonction (10) étant reliés entre eux du côté interne au moyen d'un élément de liaison (19) dans une direction transversale (Y), **caractérisé en ce qu'**au moins un crochet de jonction (10) comporte du côté interne un élément de serrage (2) disposé en regard de l'élément de liaison (19).

2. Dispositif de jonction à crochets (1) et bande transporteuse selon la revendication 1, **caractérisé en ce que** les crochets de jonction (10) comportent chacun du côté interne un élément de serrage (2) disposé en regard de l'élément de liaison (19).

3. Dispositif de jonction à crochets (1) et bande transporteuse selon la revendication 1 ou 2, **caractérisé en ce que** les crochets de jonction (10) comportent du côté interne un élément de serrage commun (2) disposé en regard de l'élément de liaison (19) et s'étendant dans la direction transversale (Y) sur les crochets de jonction (10).

4. Dispositif de jonction à crochets (1) et bande transporteuse selon l'une des revendications précédentes, **caractérisé en ce que** l'élément de liaison (19) et l'élément de serrage (2) sont disposés directement l'un en face de l'autre.

5. Dispositif de jonction à crochets (1) et bande transporteuse selon l'une des revendications précédentes, **caractérisé en ce que** l'élément de liaison (19) est réalisé sous la forme d'un fil de liaison (19) s'étendant dans la direction transversale (Y).

6. Dispositif de jonction à crochets (1) et bande transporteuse selon l'une des revendications précédentes, **caractérisé en ce que** l'élément de serrage (2) est réalisé sous la forme d'un fil de serrage (2) s'étendant dans la direction transversale (Y).

7. Dispositif de jonction à crochets (1) et bande transporteuse selon l'une des revendications précédentes, **caractérisé en ce que** l'élément de serrage (2) est conçu pour pénétrer dans la bande transporteuse (3), de préférence dans une couche de recouvrement élastomère (31) de la bande transporteuse (3).

8. Dispositif de jonction à crochets (1) et bande transporteuse selon l'une des revendications précédentes, **caractérisé en ce que** les crochets de jonction (10) sont en outre conçus pour maintenir entre eux l'extrémité ouverte de la bande transporteuse (3) par verrouillage de forme au moyen de rivets (18).

9. Dispositif de jonction à crochets et bande transporteuse selon l'une des revendications précédentes, **caractérisé en ce que** la bande transporteuse comporte un élément de traction textile plan (32).

10. Dispositif de jonction à crochets et bande transporteuse selon l'une des revendications précédentes, **caractérisé en ce qu'**une pluralité d'éléments de traction de type câble (32) s'étendent parallèlement les uns aux autres dans une direction de fonctionnement (X) de la bande transporteuse (3).

11. Dispositif de jonction à crochets et bande transporteuse selon l'une des revendications précédentes, **caractérisé en ce qu'**une couche de recouvrement élastomère (31), présentant une dureté Shore plus élevée qu'un corps de base élastomère (30), est disposée entre les deux couches de recouvrement élastomères (31).
